# EUROPEAN PATENT SPECIFICATION

(11) **EP 4 336 635 B1**
(45) Date of publication and mention of the grant of the patent: **02.12.2026**
(21) Application number: 22878889.9
(22) Date of filing: 05.10.2022
(51) Int. Cl.: H01M 50/178, B29C 65/00, B29L 31/00, H01M 10/04, H01M 50/105, H01M 50/548, H01M 50/557

(54) **METHOD FOR SEALING POUCH OF POUCH-TYPE SECONDARY BATTERY AND MAIN SEALING TOOL USED IN SAME METHOD**
VERFAHREN ZUM VERSIEGELN EINES BEUTELS EINER BEUTELARTIGEN SEKUNDÄRBATTERIE UND IN DIESEM VERFAHREN VERWENDETES HAUPTSIEGELWERKZEUG
PROCÉDÉ DE SCELLEMENT DE POCHE DE BATTERIE SECONDAIRE DE TYPE POCHE ET OUTIL PRINCIPAL DE SCELLEMENT UTILISÉ DANS CETTE MÉTHODE

(30) Priority: 06.10.2021 KR 20210132371
(43) Date of publication of application: 13.03.2024
(73) Proprietor: LG Energy Solution, Ltd., Seoul 07335 (KR)
(72) Inventor: PARK, Sujin, Daejeon 34122 (KR); LEE, Minjae, Daejeon 34122 (KR); SEOL, Ju Yeong, Daejeon 34122 (KR); KIM, Jin Kyu, Daejeon 34122 (KR); YANG, Heejune, Daejeon 34122 (KR)
(74) Representative: Plasseraud IP
(86) International application number: PCT/KR2022/015004
(87) International publication number: WO 2023/059068

(56) References cited:
- EP-A1- 2 876 724
- CN-U- 209 785 987
- KR-A- 20150 037 077
- KR-A- 20160 038 600
- KR-A- 20190 023 649
- US-A1- 2020 067 034
- US-A1- 2021 013 538
- US-B2- 11 024 912

## Description

### [Technical Field]

The present invention relates to a pouch sealing method for a pouch-type secondary battery and a main sealing tool used in this method.

### [Background Art]

Lithium secondary batteries, which are attracting attention as a next-generation power source among rechargeable secondary batteries, have high energy density, no memory effect, a low degree of spontaneous discharge even when not in use, and very lightweight. Accordingly, the lithium secondary batteries are often used in portable electronic devices such as laptop computers, cameras, and mobile phones. In addition, due to high energy density, the lithium secondary batteries are increasingly used in the field of a defense industry, an automation system, an automobile and an aviation industry, and are widely commercially available for a motor drive source for electric vehicles and hybrid vehicles.

Such lithium secondary batteries can generally be classified into lithium ion batteries using a liquid electrolyte and lithium polymer batteries using a polymer electrolyte depending on the type of electrolytic solution. In addition, the secondary batteries are manufactured in various shapes, and can be broadly classified into cylindrical, prismatic, and pouch types.

In particular, the pouch-type lithium secondary battery has a case made of a pouch packaging material that is significantly lighter and more flexible than the aluminum case, and can have a higher energy density than the prismatic lithium secondary battery.

In the pouch-type lithium secondary battery, a sealing portion is formed at an edge of an exterior material to seal the pouch exterior material. Since the edge increases a dead space of the secondary battery and causes a decrease in the energy density per volume, a technology for increasing the energy density of the secondary battery by bending or folding the edge sealing portion is used.

In addition, a method for maximally reducing a proportion of the dead space due to the sealing portion formed at the edge compared to the exterior material having the same size by forming a sealing portion having a predetermined width as close to the electrode assembly as possible at the edge of the exterior material is also applied.

For example, Korean Patent Publication No. 10-0883919 discloses a technique of cutting out a corner in which left and right sealing portions and an upper sealing portion intersect to fold the sealing portions of the left and right edge and fold the sealing portion of the upper edge. However, when the corner in which the both sealing portions and the upper sealing portion intersect is cut out in this way, there is a problem that the sealing reliability of the exterior material deteriorates, and there may be a problem that the connection of a tab-lead coupling part inside the exterior material may be damaged or a short circuit occurs between the electrode assembly and the electrode tab, when bending the upper sealing portion along a bending line excessively nearer to the electrode assembly accommodated in the exterior material.

### [Related art Document]

### [Patent Document]

Korean Patent Publication No. 10-0883919
Document US 2020/067034 A1 discloses a sealing block for sealing a pouch-shaped secondary battery including a main body for sealing the outer edge of the battery case and a wrinkle prevention unit including a curved structure corresponding to a rounded corner of the reception part of the battery case.

### [Disclosure]

### [Technical Problem]

The present invention was devised to solve the above problems of the related art.

It is an object of the present invention to provide a pouch sealing method for a pouch-type secondary battery capable of ensuring excellent sealing and insulating properties, while maximally reducing the ratio of dead space due to the sealing portion of the pouch-type secondary battery, and a sealing tool used in the method.

### [Technical Solution]

In order to achieve the above object, the present invention provides a pouch sealing method according to claim 1.

The pouch sealing method after the invention may present one or more feature(s) of dependent claims 2 to 5, in any combination allowed by the claims.

Further, the present invention provides a main sealing tool according to claim 6.

The main sealing tool after the invention may present one or more feature(s) of dependent claims 7 to 9, in any combination allowed by the claims.

### [Advantageous Effects]

The pouch sealing method for a pouch-type secondary battery of the present invention provides excellent sealing and insulating properties, while minimizing the ratio of dead space of the sealing portion.

Also, the pouch sealing tool used in the above method effectively reduces the ratio of dead space and provides excellent sealing and insulating properties to the pouch case.

### [Description of Drawings]

FIG. 1 is a photograph of the form of a pouch-type secondary battery with a reduced dead space.
FIG. 2 is a diagram schematically showing the form of degassing sealing performed in the process of manufacturing the pouch-type secondary battery having the form shown in FIG. 1.
FIG. 3 is a diagram showing the cause of deterioration of sealing and insulating properties caused by the degassing sealing of the form shown in FIG. 2.
FIG. 4 is a diagram showing an embodiment of the degassing sealing in the pouch sealing of the pouch-type secondary battery of the present invention.
FIG. 5 is a diagram showing an embodiment of a main sealing in the pouch sealing of the pouch-type secondary battery of the present invention.
FIG. 6 is an enlarged view of an embodiment of the main sealing in the pouch sealing of the pouch-type secondary battery of the present invention.
FIG. 7 is a diagram showing the effect of an embodiment of the degassing sealing in the pouch sealing of the pouch-type secondary battery of the present invention.
FIG. 8 is a perspective view showing an embodiment form of a main sealing tool used for main sealing in the pouch sealing of the pouch-type secondary battery of the present invention.
FIG. 9 is a diagram showing a photograph of the actual shape of the main sealing tool used for the main sealing in the pouch sealing of the pouch-type secondary battery of the present invention and its specification.

### [Best Mode]

Hereinafter, the present invention will be described in detail based on the accompanying drawings so that a person having ordinary knowledge in the technical field to which the present invention belongs can easily carry it out. This invention may, however, be embodied in many different forms and is not limited to the embodiments set forth herein.

When a certain component is referred to as being "connected to, provided in or installed in" another component, it may be directly connected to or installed in the other component, but it should be understood that other configurations may be present between them. On the other hand, when a certain component is referred to as being "directly connected to, provided in, or installed in" another component, it should be understood that there are no other components between them.

The present invention will be described below.

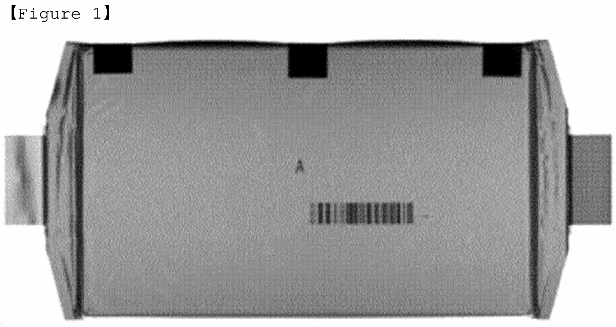

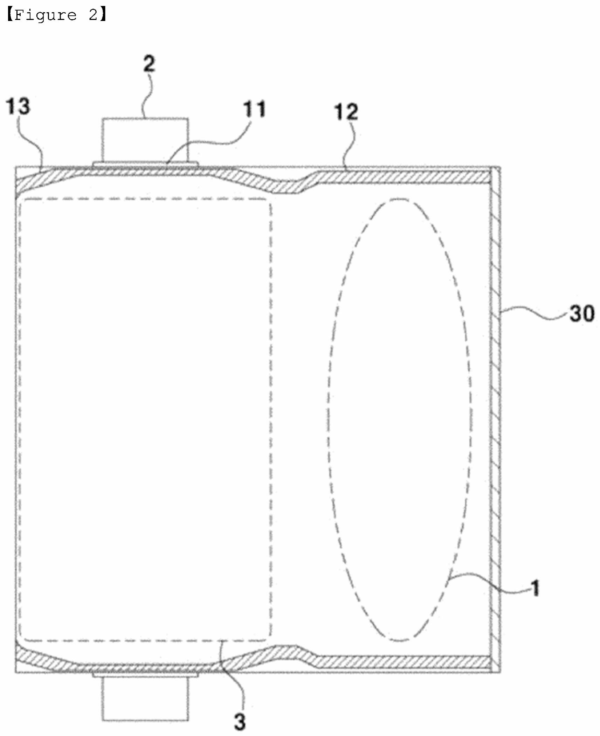

In the related art, a pouch-type secondary battery having a structure as shown in FIG. 1 is manufactured to reduce the dead space due to the sealing portion on the side where the electrode terminals are located. In order to manufacture the pouch-type secondary battery as described above, sealing in the form shown in FIG. 2 is performed when degassing sealing.

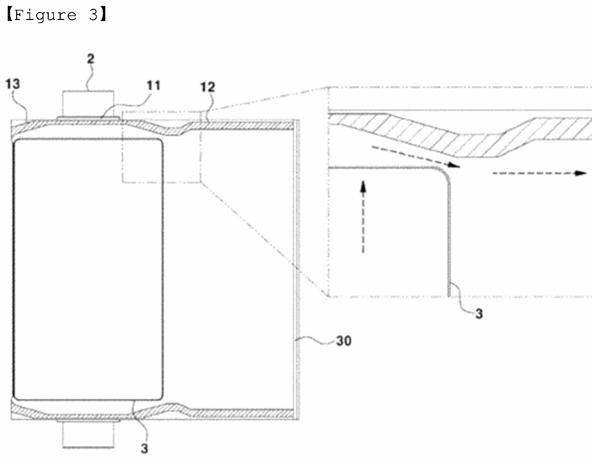

However, when such a sealing structure is applied, as shown in FIG. 3, the space between the edge of the electrode assembly on the side where the electrode terminals are located and the sealing portion is formed to be narrow (part (2)). Therefore, after the formation process, when the gas existing in the electrode assembly housing portion escapes from the narrow space in the cell press process, a large pressure is formed, and the inclined sealing portion on the dead space side is damaged by such pressure. As a result, the insulating properties of the sealing portion also deteriorate.

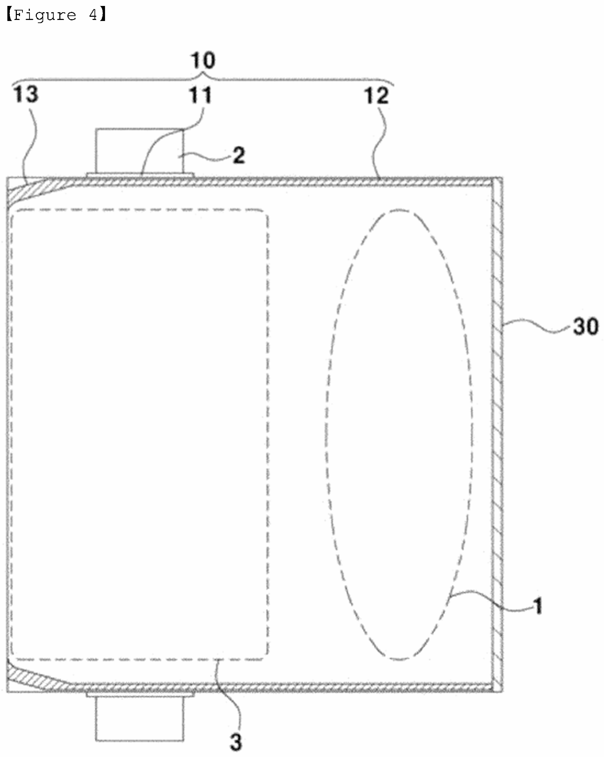

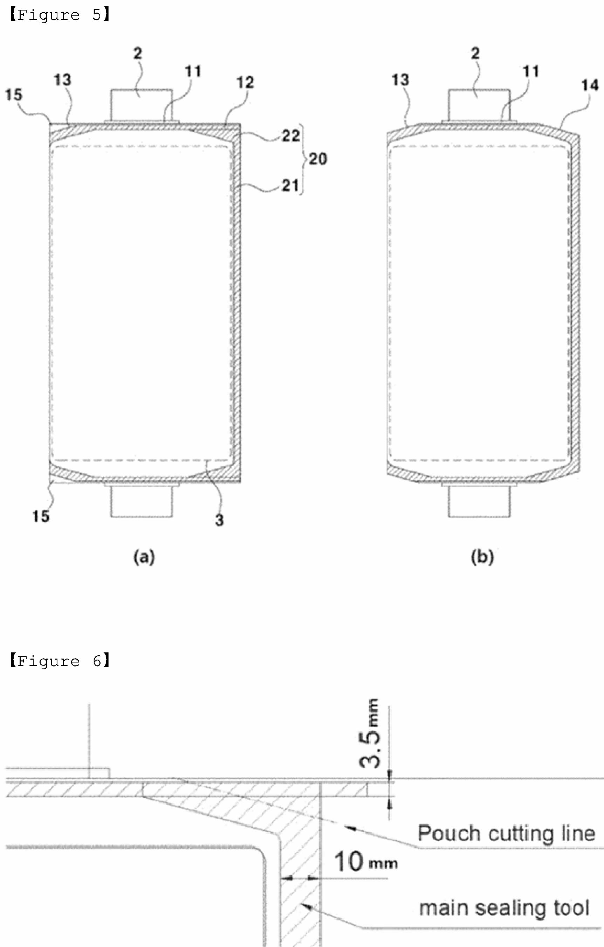

FIG. 4 is a diagram showing an embodiment of a degassing sealing in the pouch sealing of the pouch-type secondary battery of the present invention, and FIG. 5 is a diagram showing an embodiment of the main sealing in the pouch sealing of the pouch-type secondary battery of the present invention.

The pouch sealing method of the pouch-type secondary battery of the present invention includes:
(a) a step of performing degassing sealing including a dead space 1;
(b) a step of performing a formation process;
(c) a step of performing a degassing process; and
(d) a step of performing main sealing.

As shown in FIG. 4, the degassing sealing is formed such that a full-width sealing portion 10 including an electrode terminal sealing portion 11 includes a horizontal sealing portion 12 formed from the electrode terminal 2 to a distal end of the dead space 1 in a horizontal direction, and an inclined sealing portion 13 in the direction opposite to the horizontal sealing portion 12, wherein the inclined sealing portion 13 includes an inclined portion inclined toward a electrode assembly housing portion 3 between the electrode terminal 1 and a distal end.

As shown in FIG. 5, the main sealing includes performance of a parallel sealing 21 which is parallel to a full-length direction of the electrode assembly housing portion 3, and performance of a correction 22 such that the horizontal sealing portion 12 of the full-width sealing portion is symmetrical with the inclined sealing portion 13 of the opposite direction.

As shown in FIG. 5(b), the pouch sealing method for a pouch-type secondary battery according to the present invention may further include a process of forming an inclined portion (chamfering step) by symmetrically removing an outer horizontal portion 12 of the corrected portion 22 to the inclined sealing portion 13 after main sealing. At this time, the dead space 1 can be removed by cutting before and after the main sealing.

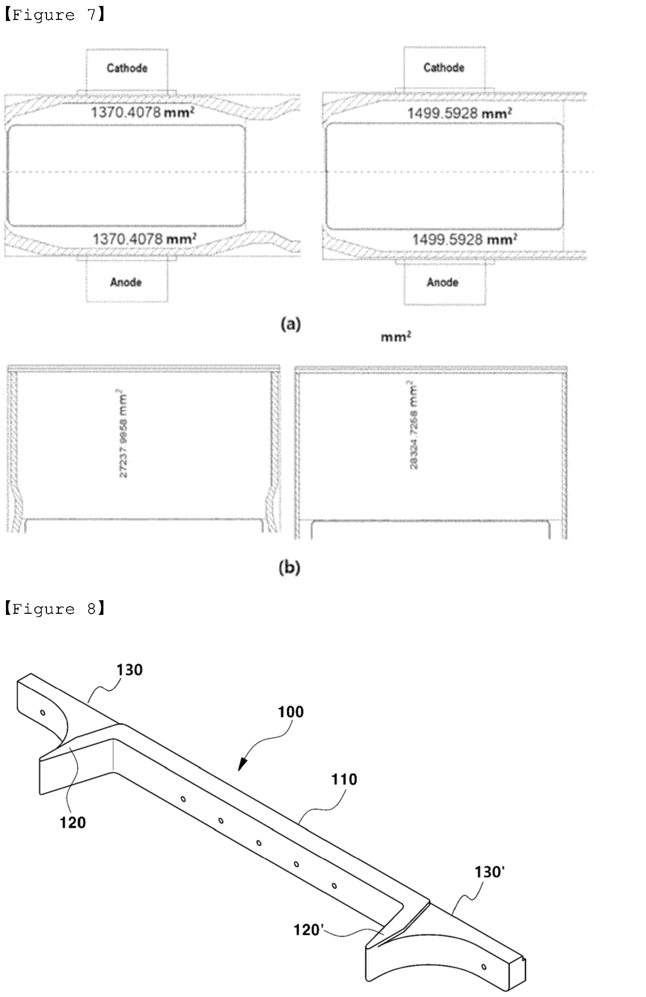

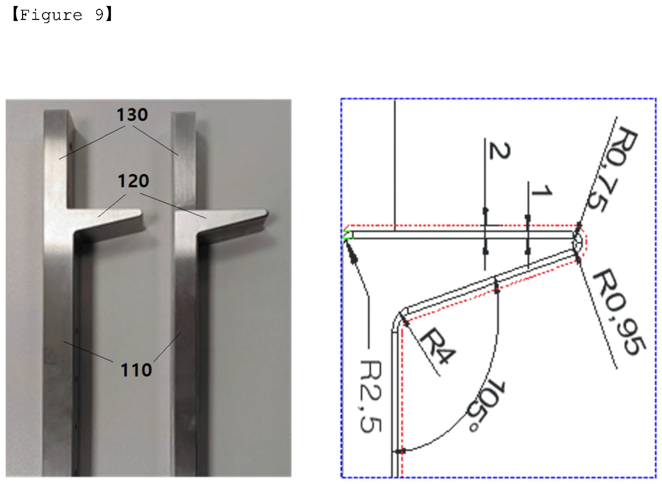

In an embodiment of the invention, the main sealing can be performed using the main sealing tool 100 shown in FIGS. 8 and 9.

As shown in FIGS. 8 and 9, the main sealing tool 100 may include a linear pressing portion 110 that performs a parallel sealing parallel to a full-length direction of the electrode assembly housing portion 3 (forming the parallel sealing portion 21), and an inclined pressing portion 120 coupled to one end of the linear pressing portion with an internal angle between exceeding 90 degrees to 150 degrees, more preferably 100 degrees to 130 degrees.

The inclined pressing portion 120 is used to correct the horizontal sealing portion 12 of the full-width sealing portion 10 to be symmetrical with the inclined sealing portion 13 of the opposite direction.

An inclined pressing portion 120' may be further coupled to the other end of the linear pressing portion 110, wherein the inclined pressing portion 120' is coupled in the same direction and at the same internal angle with the inclined pressing portion 120.

In an embodiment of the present invention, in the pouch sealing method for the pouch-type secondary battery, when the main sealing performs the correction 22 such that the horizontal sealing portion 12 of the full-width sealing portion 10 is symmetrical with the inclined sealing portion 13 of the opposite direction, as shown in FIG. 6, the inclined portion pressing portion 120 of the main sealing tool 100 may be applied only to the remaining inclined portion except for the horizontal sealing portion 12 for degassing sealing or may be applied to the horizontal sealing portion 12 and the inclined portion at the same time.

In an embodiment of the present invention, in the pouch-type secondary battery, the electrode terminal 2 may be formed only in one direction, or may exist in both directions symmetrical with each other. When the electrode terminals exist in both directions symmetrical with each other, both sides of the full-width sealing portion 10 may be formed in the same form and in the same manner.

In an embodiment of the present invention, the degassing sealing may include sealing the distal end of the full--width direction of the dead space 1 in a straight line to the full-length direction to form a full-length direction degassing sealing portion (30 of FIG. 4).

In an embodiment of the present invention, the degassing sealing may include sealing the distal end of the electrode assembly housing portion in the full--width direction (direction opposite to the dead space) in a straight line to the full-length direction. If the distal end of the electrode assembly housing portion in the full-width direction is in the state of being sealed by the pouch case structure (see FIG. 4), it may not include the sealing.

According to the pouch sealing method for a pouch-type secondary battery of the present invention, as shown in FIG. 7, a sufficient flow path is formed through which the gas can escape from the electrode assembly housing portion 3 to the dead space 1 in the degassing process. Moreover, according to such a degassing sealing form, there is provided an effect in which, as shown in FIG. 7(a), the cross-sectional area of the space where the electrode assembly housing portion 3 is located increases by 9.43%, and as shown in FIG. 7(b), the cross-sectional area of the dead space 1 also increases by 3.99%.

In an embodiment of the present invention, the degassing sealing of the step (a) is a step of sealing a dead space to perform a degassing process for removing gas generated after the formation process, and can be performed by a method known in the art, except for formation of the horizontal sealing portion 12 as described above. In addition, the formation process of step (b) and the degassing process of step (c) can be performed by a method known in the art.

Even in the case of the main sealing in the above step (d), it can be performed by the method known in this field, except for the process of forming the corrected inclined sealing portion 14 of FIG. 5.

A formation process in the present invention means a process that is also called an activation process in this field. Due to the characteristics of the secondary battery, the activation process for the activation of an anode active material and the formation of a stable Solid Electrolyte Interface (SEI) film at a cathode needs to precede at the initial cycle. However, a large amount of gas is generated by the activation process and exists inside the exterior material. Such gas needs to be removed through an opening or a cut formed in the gas pocket (dead space) of the exterior material, and the exterior material is heat-welded and sealed to form the final product shape (main sealing). The process of discharging the gas inside the secondary battery in this way is called a degassing process.

FIG. 8 is a perspective view showing an embodiment of the main sealing tool 100 used for the main sealing in the pouch sealing of the pouch-type secondary battery of the present invention, and FIG. 9 is a diagram showing a photograph of the actual form of the main sealing tool, and its specification.

The main sealing tool of the present invention has a linear pressing portion 110 that performs a parallel sealing (20 of FIGS. 5) parallel to the electrode assembly housing portion in the full-length direction, and an inclined pressing portion 120 coupled to one end of the linear pressing portion with an internal angle between exceeding 90 degrees to 150 degrees, preferably 100 to 130 degrees, and the inclined pressing portion 120 performs a function of correcting the horizontal sealing portion 12 of the full-width sealing portion 10 to be symmetrical with the inclined sealing portion 13 of an opposite direction.

In an embodiment of the present invention, although the form of the linear pressing portion 110 is not particularly limited as long as it is a form capable of performing the parallel sealing 21 (formation of the parallel sealing portion 20), it may have a quadrangular prism shape.

In an embodiment of the present invention, an inclined pressing portion 120' may be further coupled to the other end of the linear pressing portion 110, wherein the inclined pressing portion 120' is coupled in the same direction and at the same internal angle with the inclined pressing portion 120.

In an embodiment of the present invention, although the inclined pressing portion 120 is not particularly limited as long as it has a form capable of forming the corrected inclined sealing portion 14 as shown in FIG. 5, as shown in FIGS. 8 and 9, it may be in the form similar to a triangular prism, and specifically in the form of a right-angled triangular prism. However, since the corrected inclined sealing portion 14 can be formed even in the case of a quadrangular prism shape, the shape is not particularly limited.

In an embodiment of the present invention, the main sealing tool 100 may further include an extension 130 in which the linear pressing portion 110 extends further outward from the inclined pressing portion 120, as shown in FIGS. 8 and 9. The extension 130 can perform the function of coupling the main sealing tool 100 to the pressure device.

### [Description of symbols]

1: Dead space 2: Electrode terminal
3. Electrode assembly housing portion 10: Full-width sealing portion
11: Electrode terminal sealing portion 12: Horizontal sealing portion
13: Inclined sealing portion 14: Corrected inclined sealing portion
15: Horizontal portion 20: Main sealing portion
21: Parallel sealing portion 22: Corrected portion
30: Full-length direction degassing sealing portion
100: Main sealing tool 110: Linear pressing portion
120: Inclined pressing portion 130: Extension

## Claims

1. A pouch sealing method for a pouch-type secondary battery, the method comprising:
(a) performing degassing sealing including a dead space (1);
(b) performing a formation process;
(c) performing a degassing process; and
(d) performing main sealing,
wherein the degassing sealing is formed such that a full-width sealing portion (10) including an electrode terminal sealing portion (11) includes a horizontal sealing portion (12) formed from an electrode terminal (2) to a dead space (1) distal end in a horizontal direction, and an inclined sealing portion (13) in the direction opposite to the horizontal sealing portion (12), wherein the inclined sealing portion (13) includes an inclined portion inclined toward a electrode assembly housing portion (3) between the electrode terminal (1) and a distal end, and
the main sealing includes a parallel sealing (21) which is parallel to a full-length direction of the electrode assembly housing portion (3), and sealing for correcting the horizontal sealing portion (12) of the full-width sealing portion to be symmetrical with the inclined sealing portion (13) of the opposite direction.

2. The pouch sealing method for the pouch-type secondary battery according to claim 1, wherein after the main sealing, an outer horizontal portion (12) of the corrected portion (22) is symmetrically removed to the inclined sealing portion (13) to form an inclined portion.

3. The pouch sealing method for the pouch-type secondary battery according to claim 1, wherein the electrode terminal (2) of the pouch-type secondary battery is formed only in one direction or in two directions symmetrical to each other.

4. The pouch sealing method for the pouch-type secondary battery according to claim 1, wherein the degassing sealing includes sealing a distal end of the full-width direction of the dead space (1) in a straight line in the full-length direction.

5. The pouch sealing method for the pouch-type secondary battery according to claim 1, wherein the degassing sealing includes sealing a distal end of the full-width direction of the electrode assembly housing portion (3) in a straight line to the full-length direction; or does not include the sealing of the distal end, in case that the distal end of the full-width direction of the electrode assembly housing portion (3) is in the state of being sealed by the pouch case structure.

6. A main sealing tool (100) used for the main sealing according to claim 1, comprising:
a linear pressing portion (110) configured to perform a parallel sealing parallel to a full-length direction of an electrode assembly housing portion (3);
**characterized in that** the main sealing tool (100) further comprises an inclined pressing portion (120) coupled to one end of the linear pressing portion with an internal angle between exceeding 90 degrees to 150 degrees,
wherein the inclined pressing portion (120) is configured to perform a function of correcting the horizontal sealing portion (12) of the full-width sealing portion (10) to be symmetrical with an inclined sealing portion (13) in an opposite direction.

7. The main sealing tool (100) according to claim 6, wherein an inclined pressing portion (120') is further coupled to the other end of the linear pressing portion (110),
wherein the additioned inclined pressing portion (120') is coupled in the same direction and at the same internal angle with the inclined pressing portion (120).

8. The main sealing tool (100) according to any of claims 6 and 7, wherein the inclined pressing portion (120) has a shape similar to a triangular prism or a quadrangular prism.

9. The main sealing tool (100) according to any of claims 6 and 7, wherein the main sealing tool (100) further comprises an extension (130) through which the linear pressing portion (110) extends further outward from the inclined pressing portion (120).

## Patentansprüche

1. Verfahren zum Versiegeln eines Beutels für eine beutelartige Sekundärbatterie, wobei das Verfahren umfasst:
(a) Durchführen einer Entgasungsversiegelung, die einen Totraum (1) beinhaltet;
(b) Durchführen eines Formgebungsprozesses;
(c) Durchführen eines Entgasungsprozesses; und
(d) Durchführen einer Hauptversiegelung,
wobei die Entgasungsversiegelung derart ausgebildet ist, dass ein vollbreiter Versiegelungsabschnitt (10), der einen Elektrodenanschluss-Versiegelungsabschnitt (11) beinhaltet, einen horizontalen Versiegelungsabschnitt (12), der von einem Elektrodenanschluss (2) zu einem distalen Ende des Totraums (1) in einer horizontalen Richtung ausgebildet ist, und einen geneigten Versiegelungsabschnitt (13) in der zum horizontalen Versiegelungsabschnitt (12) entgegengesetzten Richtung beinhaltet, wobei der geneigte Versiegelungsabschnitt (13) einen geneigten Abschnitt beinhaltet, der zu einem Elektrodenbaugruppen-Unterbringungsabschnitt (3) zwischen dem Elektrodenanschluss (1) und einem distalen Ende geneigt ist, und
die Hauptversiegelung eine parallele Versiegelung (21), die parallel zu einer gesamten Längsrichtung des Elektrodenbaugruppen-Unterbringungsabschnitts (3) ist, und eine Versiegelung zum Korrigieren des horizontalen Versiegelungsabschnitts (12) des vollbreiten Versiegelungsabschnitts beinhaltet, sodass dieser symmetrisch zu dem geneigten Versiegelungsabschnitt (13) der entgegengesetzten Richtung ist.

2. Verfahren zum Versiegeln eines Beutels für die beutelartige Sekundärbatterie nach Anspruch 1, wobei nach der Hauptversiegelung ein äußerer horizontaler Abschnitt (12) des korrigierten Abschnitts (22) symmetrisch zum geneigten Versiegelungsabschnitt (13) entfernt wird, um einen geneigten Abschnitt zu bilden.

3. Verfahren zum Versiegeln eines Beutels für die beutelartige Sekundärbatterie nach Anspruch 1, wobei der Elektrodenanschluss (2) der beutelartigen Sekundärbatterie nur in einer Richtung oder in zwei zueinander symmetrischen Richtungen ausgebildet ist.

4. Verfahren zum Versiegeln eines Beutels für die beutelartige Sekundärbatterie nach Anspruch 1, wobei die Entgasungsversiegelung das Versiegeln eines distalen Endes der Vollbreitenrichtung des Totraums (1) in einer geraden Linie in der gesamten Längsrichtung beinhaltet.

5. Verfahren zum Versiegeln eines Beutels für die beutelartige Sekundärbatterie nach Anspruch 1, wobei die Entgasungsversiegelung das Versiegeln eines distalen Endes der Vollbreitenrichtung des Elektrodenbaugruppen-Unterbringungsabschnitts (3) in einer geraden Linie zur gesamten Längsrichtung beinhaltet; oder das Versiegeln des distalen Endes nicht beinhaltet, falls das distale Ende der Vollbreitenrichtung des Elektrodenbaugruppen-Unterbringungsabschnitts (3) in dem Zustand ist, durch die Beutelgehäusestruktur versiegelt zu sein.

6. Hauptsiegelwerkzeug (100), das für die Hauptversiegelung nach Anspruch 1 verwendet wird, umfassend:
einen linearen Pressabschnitt (110), der so konfiguriert ist, dass er eine parallele Versiegelung parallel zu einer gesamten Längsrichtung eines Elektrodenbaugruppen-Unterbringungsabschnitts (3) durchführt;
**dadurch gekennzeichnet, dass** das Hauptsiegelwerkzeug (100) ferner einen geneigten Pressabschnitt (120) umfasst, der mit einem Ende des linearen Pressabschnitts mit einem Innenwinkel gekoppelt ist, der über 90 Grad bis 150 Grad liegt,
wobei der geneigte Pressabschnitt (120) so konfiguriert ist, dass er eine Funktion des Korrigierens des horizontalen Versiegelungsabschnitts (12) des vollbreiten Versiegelungsabschnitts (10) durchführt, sodass dieser symmetrisch zu einem geneigten Versiegelungsabschnitt (13) in einer entgegengesetzten Richtung ist.

7. Hauptsiegelwerkzeug (100) nach Anspruch 6, wobei ein weiterer geneigter Pressabschnitt (120') ferner mit dem anderen Ende des linearen Pressabschnitts (110) gekoppelt ist,
wobei der hinzugefügte geneigte Pressabschnitt (120') in derselben Richtung und mit demselben Innenwinkel wie der geneigte Pressabschnitt (120) gekoppelt ist.

8. Hauptsiegelwerkzeug (100) nach einem der Ansprüche 6 und 7, wobei der geneigte Pressabschnitt (120) eine Form aufweist, die einem dreieckigen Prisma oder einem viereckigen Prisma ähnlich ist.

9. Hauptsiegelwerkzeug (100) nach einem der Ansprüche 6 und 7, wobei das Hauptsiegelwerkzeug (100) ferner eine Verlängerung (130) umfasst, durch die sich der lineare Pressabschnitt (110) weiter nach außen von dem geneigten Pressabschnitt (120) erstreckt.

## Revendications

1. Procédé de scellement de poche pour une batterie secondaire de type poche, le procédé comprenant :
(a) la réalisation d'un scellement de dégazage comprenant un espace mort (1) ;
(b) la réalisation d'un processus de formation ;
(c) la réalisation d'un processus de dégazage ; et
(d) la réalisation d'un scellement principal,
dans lequel le scellement de dégazage est formé de sorte qu'une portion de scellement sur toute la largeur (10) comprenant une portion de scellement de borne d'électrode (11) comprenne une portion de scellement horizontale (12) formée depuis une borne d'électrode (2) jusqu'à une extrémité distale d'espace mort (1) dans une direction horizontale, et une portion de scellement inclinée (13) dans la direction opposée à la portion de scellement horizontale (12), dans lequel la portion de scellement inclinée (13) comprend une portion inclinée, inclinée vers une portion de logement d'ensemble d'électrodes (3) entre la borne d'électrode (1) et une extrémité distale, et
le scellement principal comprend un scellement parallèle (21) qui est parallèle à une direction sur toute la longueur de la portion de logement d'ensemble d'électrodes (3), et un scellement pour corriger la portion de scellement horizontale (12) de la portion de scellement sur toute la largeur pour qu'elle soit symétrique par rapport à la portion de scellement inclinée (13) de la direction opposée.

2. Procédé de scellement de poche pour la batterie secondaire de type poche selon la revendication 1, dans lequel après le scellement principal, une portion horizontale externe (12) de la portion corrigée (22) est retirée de manière symétrique par rapport à la portion de scellement inclinée (13) pour former une portion inclinée.

3. Procédé de scellement de poche pour la batterie secondaire de type poche selon la revendication 1, dans lequel la borne d'électrode (2) de la batterie secondaire de type poche est formée uniquement dans une seule direction ou dans deux directions symétriques l'une par rapport à l'autre.

4. Procédé de scellement de poche pour la batterie secondaire de type poche selon la revendication 1, dans lequel le scellement de dégazage comprend le scellement d'une extrémité distale de la direction sur toute la largeur de l'espace mort (1) en ligne droite dans la direction sur toute la longueur.

5. Procédé de scellement de poche pour la batterie secondaire de type poche selon la revendication 1, dans lequel le scellement de dégazage comprend le scellement d'une extrémité distale de la direction sur toute la largeur de la portion de logement d'ensemble d'électrodes (3) en ligne droite vers la direction sur toute la longueur ; ou ne comprend pas le scellement de l'extrémité distale, dans le cas où l'extrémité distale de la direction sur toute la largeur de la portion de logement d'ensemble d'électrodes (3) est dans l'état d'être scellée par la structure de boîtier de poche.

6. Outil principal de scellement (100) utilisé pour le scellement principal selon la revendication 1, comprenant :
une portion de pressage linéaire (110) configurée pour réaliser un scellement parallèle, parallèle à une direction sur toute la longueur d'une portion de logement d'ensemble d'électrodes (3) ;
**caractérisé en ce que** l'outil principal de scellement (100) comprend en outre une portion de pressage inclinée (120) couplée à une extrémité de la portion de pressage linéaire avec un angle interne compris entre plus de 90 degrés et 150 degrés,
dans lequel la portion de pressage inclinée (120) est configurée pour effectuer une fonction de correction de la portion de scellement horizontale (12) de la portion de scellement sur toute la largeur (10) pour qu'elle soit symétrique par rapport à une portion de scellement inclinée (13) dans une direction opposée.

7. Outil principal de scellement (100) selon la revendication 6, dans lequel une portion de pressage inclinée (120') supplémentaire est en outre couplée à l'autre extrémité de la portion de pressage linéaire (110),
dans lequel la portion de pressage inclinée (120') ajoutée est couplée dans la même direction et selon le même angle interne qu'avec la portion de pressage inclinée (120).

8. Outil principal de scellement (100) selon l'une quelconque des revendications 6 et 7, dans lequel la portion de pressage inclinée (120) présente une forme similaire à un prisme triangulaire ou à un prisme quadrangulaire.

9. Outil principal de scellement (100) selon l'une quelconque des revendications 6 et 7, dans lequel l'outil principal de scellement (100) comprend en outre une extension (130) à travers laquelle la portion de pressage linéaire (110) s'étend plus loin vers l'extérieur depuis la portion de pressage inclinée (120).
